# EUROPÄISCHE PATENTSCHRIFT

(11) **EP 2 420 124 B1**
(45) Veröffentlichungstag und Bekanntmachung des Hinweises auf die Patenterteilung: **14.05.2014**
(21) Anmeldenummer: 11401569.6
(22) Anmeldetag: 15.08.2011
(51) Int. Cl.: A01C 17/00

(54) **Schleuderstreuer**
Centrifugal spreader
Epandeur centrifuge

(30) Priorität: 18.08.2010 DE 102010037030
(43) Veröffentlichungstag der Anmeldung: 22.02.2012
(73) Patentinhaber: Amazonen-Werke H. Dreyer GmbH & Co. KG, 49205 Hasbergen (DE)
(72) Erfinder: Kleine-Hartlage, Hubertus, 49186 Bad Iburg (DE)

(56) Entgegenhaltungen:
- EP-A1- 1 183 924
- DE-A1- 3 935 104
- DE-A1-102006 041 083
- DE-A1-102007 021 442

## Beschreibung

Die Erfindung betrifft einen Schleuderdüngerstreuer gemäß des Oberbegriffes des Patentanspruches 1.

Ein derartiger Schleuderdüngerstreuer ist durch die DE 10 2006 041 083 A1 bekannt. Gemäß des Ausführungsbeispieles nach Fig. 7 wird über eine durch die als Hohlwelle ausgebildete Antriebswelle für die jeweilige Schleuderscheibe geführte Verstellwelle, die mittels einer schraubenlinienförmigen Verzahnung eines Verschiebemittels gegenüber der Hohlwelle verdrehbar ist, eine Verstellung der Wurfschaufeln auf der Schleuderscheibe vorgenommen.

Der Erfindung liegt die Aufgabe zu Grunde, die Verstelleinrichtung zur Verstellung der Wurfschaufeln oder Teilbereiche der Wurfschaufeln zu vereinfachen.

Diese Aufgabe wird erfindungsgemäß dadurch gelöst, dass ein zwischen der Hohlwelle und der Verstellwelle wirksames Federelement zur Verdrehung der Verstellwelle gegenüber der Hohlwelle angeordnet ist, und zwar derart, dass durch das Federelement die Verstellwelle entgegen der Drehrichtung der Hohlwelle gegenüber der Hohlwelle verdrehbar ist.

Infolge dieser Maßnahmen wird eine vereinfachte Anordnung der Verstellwelle und die Ausgestaltung der Verstellmittel zum Verstellen der Wurfschaufeln erreicht. Durch die begrenzte freie Verdrehbarkeit der Verstellwelle gegenüber der Hohlwelle wird durch die Trägheitskraft der verstellbaren Teile der wurfschaufeln mit Unterstützung des Federelementes die Umstellung der Wurfschaufeln zumindest in einer Richtung in einfacher Weise erreicht.

Eine einfache Ausgestaltung des Federelementes ergibt sich dadurch, dass das Federelement als Schenkelfeder ausgebildet ist.

Um die jeweils gewünschte definierte Einstellung der Wurfschaufeln auf der Schleuderscheibe zu erreichen, ist vorgesehen, dass zwischen der Verstellwelle und der Hohlwelle zumindest ein das Verdrehen der Verstellwelle gegenüber der Hohlwelle freigegebendes und die Verstellwelle gegenüber der Hohlwelle festzusetzendes Kupplungselement angeordnet ist.

Eine einfache Ausgestaltung des Kupplungselementes lässt sich dadurch erreichen, dass das Kupplungselement einen in axialer Richtung verschiebbaren Kupplungsstift aufweist, dass mittels des Kupplungsstiftes das zumindest eine Kupplungselement betätigbar ist.

Eine einfache Anordnung des Kupplungsstiftes des Kupplungselementes ergibt sich dadurch, dass in der Verstellwelle eine sich in axialer Richtung der Verstellwelle erstreckende Aussparung angeordnet ist, dass in dieser Aussparung der in axialer Richtung gegen ein Federelement verschiebbare Kupplungsstift angeordnet ist, dass der Kupplungsstift mit dem Betätigungselement der Verstelleinrichtung zusammenwirkt.

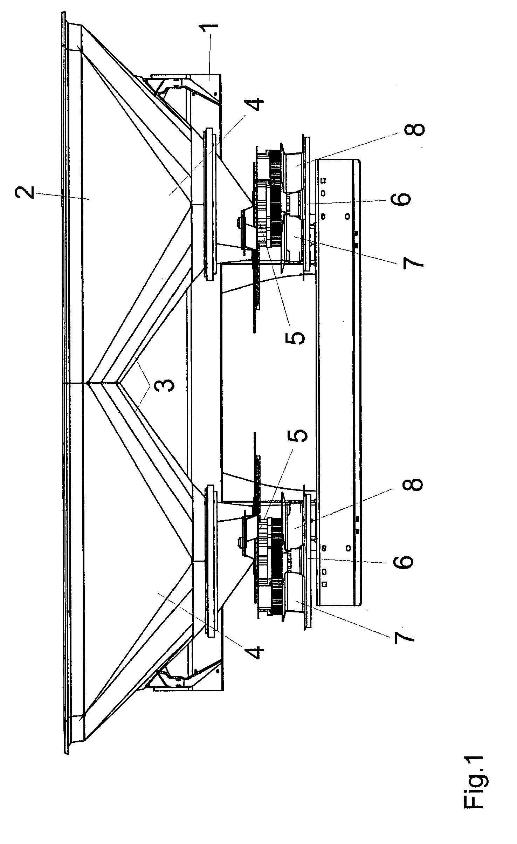

Weitere Einzelheiten der Erfindung sind der Beispielsbeschreibung und den Zeichnungen zu entnehmen. Hierbei zeigen
- Fig. 1: einen Schleuderdüngerstreuer in der Ansicht von hinten und in Prinzipdarstellung,
- Fig. 2: die in Fahrtrichtung gesehen linke Schleuderscheibe mit Antriebseinrichtung, wobei die Wurfschaufeln für das Normalstreuen eingestellt sind, in perspektivischer Darstellung,
- Fig. 3: die in Fahrtrichtung gesehen linke Schleuderscheibe mit Antriebseinrichtung, wobei die Wurfschaufeln für das Normalstreuen eingestellt sind, in der Seitenansicht,
- Fig. 4: die in Fahrtrichtung gesehen linke Schleuderscheibe mit Antriebseinrichtung, wobei die Wurfschaufeln für das Normalstreuen eingestellt sind, in der Draufsicht,

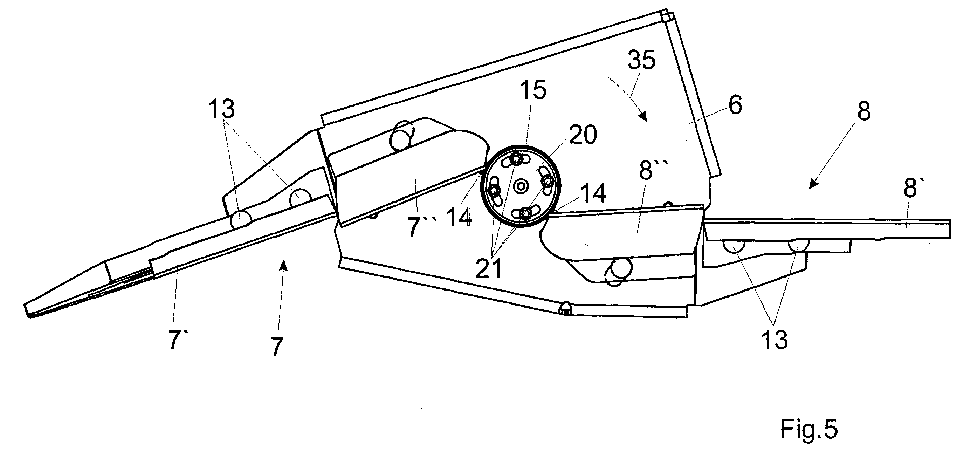

- Fig. 5: die in Fahrtrichtung gesehen linke Schleuderscheibe mit Antriebseinrichtung, wobei die Wurfschaufeln für das Grenzstreuen eingestellt sind, in der Draufsicht,
- Fig. 6: die Antriebsvorrichtung für die linke Schleuderscheibe mit der Schleuderscheibe und den Wurfschaufeln im Schnitt VI - VI, wobei die Verstelleinrichtung sich in der Position für das Normalstreuen befindet,
- Fig. 7: das Kupplungselement zwischen der Hohlwelle und der Verstellwelle im Schnitt VII - VII in der Einstellung nach Fig. 6,

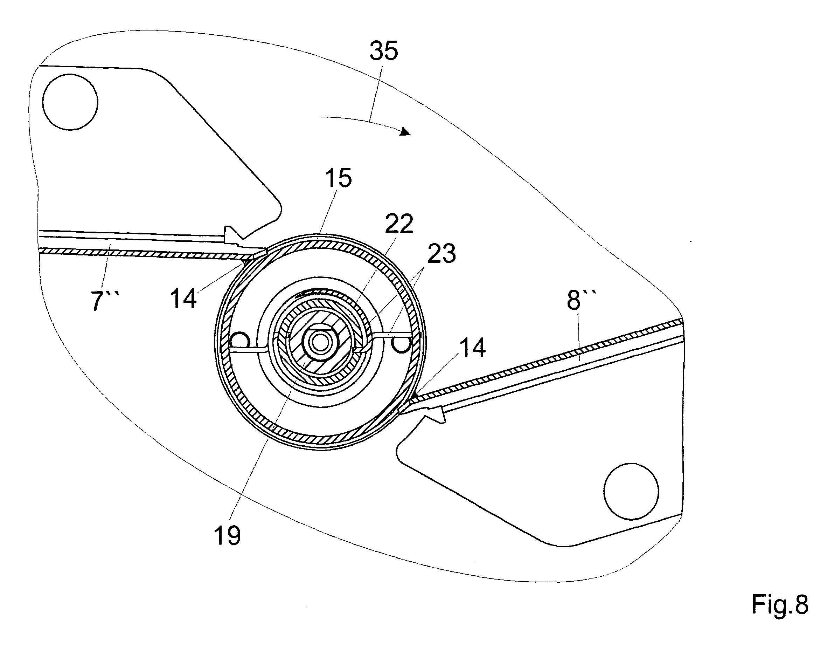

- Fig. 8: die Ausgestaltung der Hohlwelle und der Verstellwelle oberhalb der Schleuderscheibe im Schnitt VIII - VIII,
- Fig. 9: die Antriebsvorrichtung für die linke Schleuderscheibe mit der Schleuderscheibe und den Wurfschaufeln im Schnitt VI - VI, wobei die Verstelleinrichtung sich in der Position für das Grenzstreuen befindet und
- Fig. 10: das Kupplungselement zwischen der Hohlwelle und der Verstellwelle im Schnitt VII - VII in der Einstellung nach Fig. 9.

Der Schleuderdüngerstreuer weist einen Rahmen 1 und einen Vorratsbehälter 2 auf. Auf der Vorderseite des Rahmens 1 sind in bekannter und daher nicht näher dargestellter Weise Dreipunktkupplungselemente zum Anbau an einen Schlepperkraftheber angeordnet. Der Vorratsbehälter 2 weist in seinem unteren Bereich die durch das dachförmiges Mittelteil 3 voneinander getrennten Auslauftrichter 4 auf. Die Auslauftrichter 4 sind jeweils durch ein Dosierorgan 5 abgeschlossen. Unterhalb der Dosierorgane 5 ist jeweils eine rotierend angetriebene Schleuderscheibe 6 angeordnet. Die Dosierorgane 5 leiten das sich im Vorratsbehälter 2 befindliche zu verteilende Material in einstellbaren Mengen den Schleuderscheiben 6 zu. Auf den Schleuderscheiben 6 sind Wurfschaufeln 7 und 8 angeordnet, welche das ihnen zugeleitete Material in Bereitverteilung auf der Bodenoberfläche verteilen.

Jede Schleuderscheibe 6 ist über eine an der Antriebswelle 9 drehfest befestigte Nabe 10 ebenfalls drehfest und antriebsschlüssig mit der Antriebswelle 9 verbunden. Die Antriebswelle 9 ist in einem Gehäuse 11 gelagert und wird im Ausführungsbeispiel über einen Kegelradtrieb 12 von einer nicht dargestellten Kraftquelle, beispielsweise über eine Gelenkswelle von dem den Schleuderdüngerstreuer tragenden Ackerschlepper in bekannter Weise angetrieben.

Auf der Schleuderscheibe 6 sind die äußeren Teile 7', 8' der Wurfschaufeln 7 und 8 mittels der als Schrauben oder Nieten ausgebildeten Befestigungsmittel 13 befestigt. Die inneren Teile 7", 8" der Wurfschaufeln 7, 8 sind mittels geeigneter Verbindungsmittel 14 an einem als Hülse 15 ausgebildeten Übertragungselement befestigt. Hierbei können die Wurfschaufeln 7" , 8" beispielsweise an der Hülse 15 mittels der Schweißverbindung 14 angeschweißt sein.

Die Antriebswelle 9 ist als Hohlwelle ausgebildet. Durch die Hohlwelle 9 ist die um ihre Längsachse 16 gegenüber der Hohlwelle 9 verdrehbare Verstellwelle 17, der eine Verstelleinrichtung 18 zugeordnet ist, geführt. Das obere Ende der Verstellwelle 17 ist formschlüssig mit einer Verbindungshülse 19, die einen Flansch 10 aufweist, verbunden. Der Flansch 20 ist mittels Verbindungselementen 21, die im Ausführungsbeispiel als Schrauben ausgebildet sind, mit der Hülse 15 verbunden. Innerhalb der Hülse 15 ist auf der Nabe 10 in der Verlängerung der Antriebswelle 9 die die Verbindungshülse 19 umgreifende Zwischenhülse 22 angeordnet. Zwischen der Zwischenhülse 22 und der Hülse 15 ist ein federndes Element 23, welches als zwei übereinander angeordnete Schenkelfedern ausgebildet ist, angeordnet.

In dem unteren Ende 24 der Verstellwelle 17 ist eine sich in axialer Richtung der Verstellwelle 17 erstreckende Aussparung 25 angeordnet. In dieser Aussparung 25 ist ein in axialer Richtung gegen ein Federelement 26 verschiebbarer Kupplungsstift 27 angeordnet. Dieser Kupplungsstift 27 wirkt mit einer verschwenkbaren Verstelleinrichtung 18 zusammen.

Der Kupplungsstift 27 ist Bestandteil eines Kupplungselementes 28. Mittels dieses Kupplungsstiftes 27 ist das Kupplungselement 28 betätigbar. Das Kupplungselement 28 weist auf gleicher Ebene in der Innenwand der Hohlwelle 9 angeordnete Aussparungen 29 und in der Wand der Verstellwelle 17 angeordnete Durchbrüche 30 auf. In den Durchbrüchen 30 in der Verstellwelle 17 sind mit den Aussparungen 29 in der Hohlwelle 9 zusammenwirkende kugelartige Verbindungselemente 31 angeordnet.

Über die kugelartige Verbindungselemente 31 in Verbindung mit den Durchbrüchen 30 in der Verstellwelle 17 und den Aussparungen 29 in der Innenwand der Hohlwelle 9, die zusammen das Kupplungselement 28 bilden, ist die Verstellwelle 17 gegenüber der Hohlwelle 9 festsetzbarer oder freizugeben, so dass die Verstellwelle 17 und die Hohlwelle 9 sich um ein gewisses Winkelmaß zueinander verdrehen können, welches zumindest dem Verstellbarreich der inneren Teile 7" und 8" der Wurfschaufeln 7 und 8 entspricht.

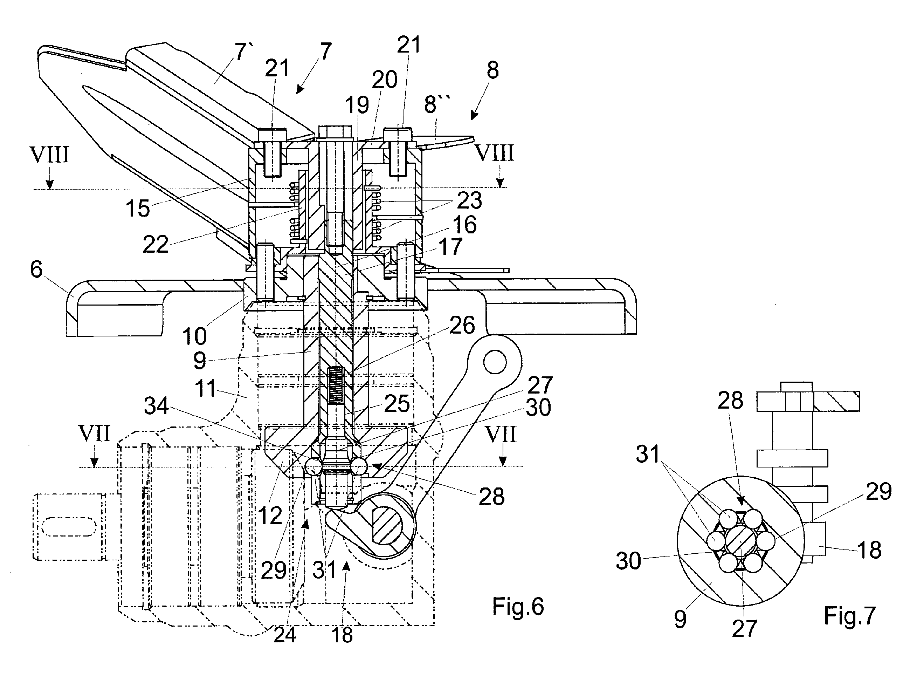

Wenn der Kupplungsstift 27 über das Betätigungselement 18 in die in Fig. 6 und 7 dargestellte Position gedrückt wird, werden durch den Kupplungsstift 27 aufgrund seiner verdickten Ausgestaltung 34 die kugelartigen Verbindungselemente 31 in die Aussparungen 29 auf der Innenseite der Hohlwelle9 gedrückt, so dass die Verstellwelle 17 gegenüber der Hohlwelle 9 festgesetzt ist, so dass die Rückwände der inneren Teile 7", 8" der Wurfschaufeln 7, 8 mit den Rückwänden der äußeren Teile 7', 8' der Wurfschaufeln 7, 8 fluchten. Somit sind die Wurfschaufeln 7, 8 auf Normalstreuen eingestellt, das heißt, dass der den Wurfschaufeln 7, 8 zugeleitete Dünger von den inneren 7" , 8" und äußeren 7', 8' Teilen der Wurfschaufeln 7, 8 abgeschleudert wird.

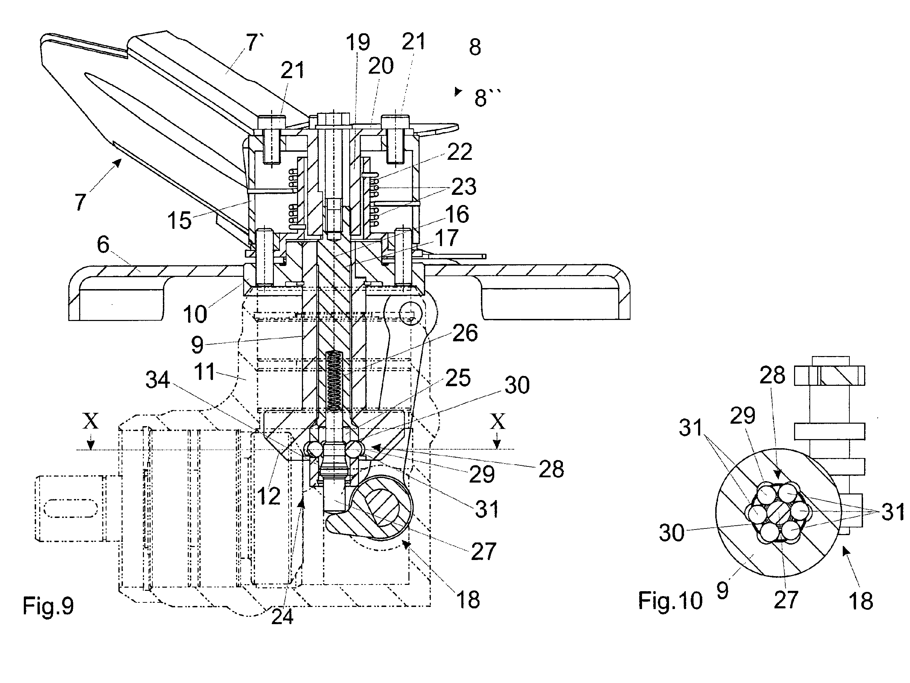

Wenn das Betätigungselement 18 in die in den Fig. 9 und 10 dargestellte Position verschwenkt wird, kann der Kupplungsstift 27 sich nach unten bewegen, in dem die Feder 26 den Kupplungsstift 27 nach unten drückt, so dass aufgrund der Ausgestaltung des Kupplungsstiftes 27 die kugelartigen Verbindungselemente 31 sicher aus den Aussparungen 29 auf der Innenseite der Hohlwelle 9 etwas heraus bewegen können, so dass sich die Verstellwelle 17 gegenüber der Hohlwelle 9 verdrehen kann. Das zwischen der Hohlwelle 9 und der Verstellwelle 17 wirksame Federelement 23, welche als Schenkelfedern ausgebildet sind, wirkt für die Verdrehung der Verstellwelle 17 gegenüber der Hohlwelle 9 und zwar derart, dass durch das Federelement 23 die Verstellwelle 17 entgegen der Drehrichtung 35 der Hohlwelle 9 und der Schleuderscheibe 6 gegenüber der Hohlwelle 9 verdrehbar ist. Somit wird aufgrund der Massenträgheit der Verstellwelle 17, der Hülse 15 und des inneren Teiles 7", 8" der Wurfschaufeln 7, 8 mit Unterstützung des Federelementes 23 das innere Teil 7", 8" der Wurfschaufeln 7, 8 entgegen der Drehrichtung 35 der Schleuderscheibe 6 verdreht. Somit wirkt das obere Ende der Verstellwelle 17 mit dem als Hülse 15 ausgebildeten Verstellelement zusammen. Das auf der Unterseite der Hohlwelle angeordnete Betätigungselement 18 der Verstelleinrichtung wirkt zur Einstellung der Verstellwelle 17 gegenüber der Hohlwelle 9 zusammen.

Somit ist also durch Betätigen des Betätigungselementes 18 durch Verdrehen der Verstellwelle 17 gegenüber der Hohlwelle 9 das innere Teil 7" , 8" der Wurfschaufeln 7, 8 gegenüber dem auf der Schleuderscheibe 6 fest angeordneten Teile 7', 8' der Wurfschaufeln 7, 8 verschwenk- bzw. verstellbar. Somit ist der Schleuderdüngerstreuer von Normalstreuen auf Grenzstreuen umzustellen.

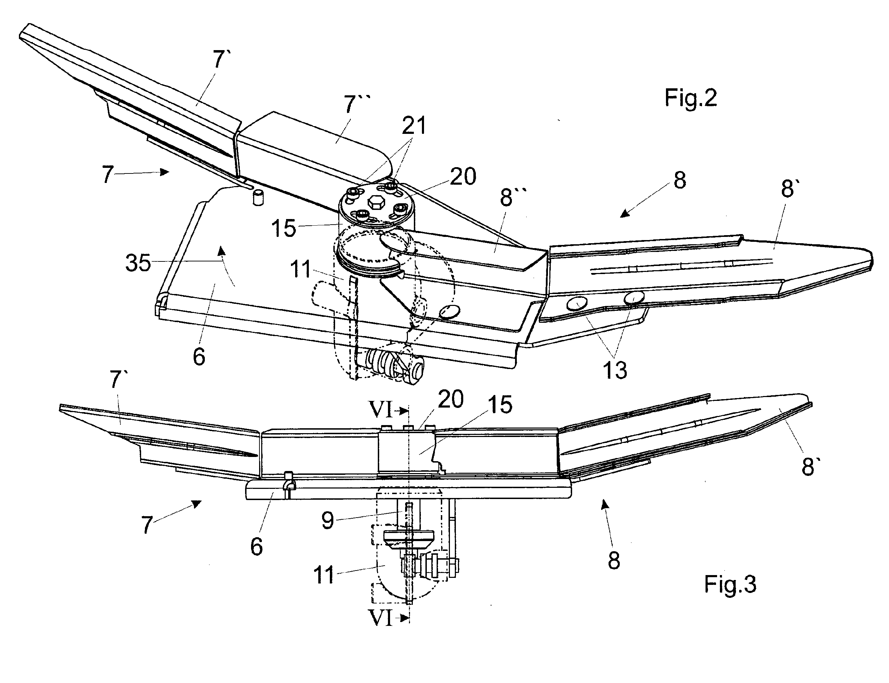

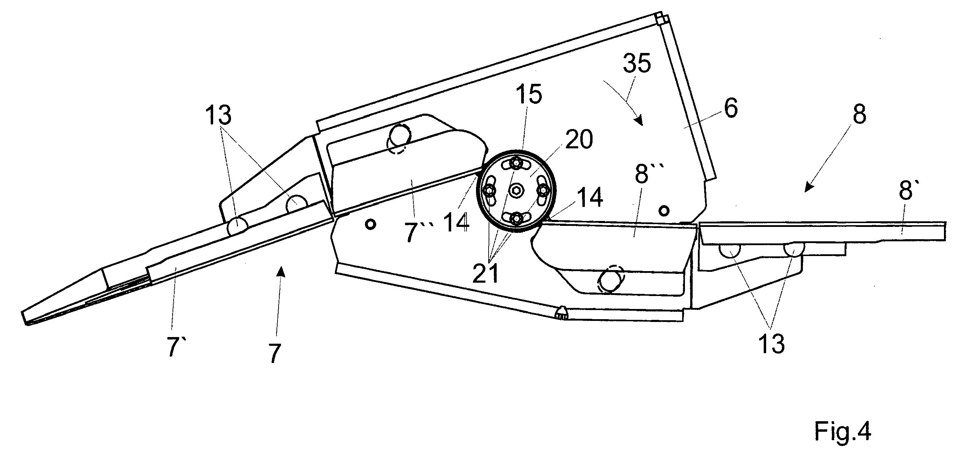

Wenn der Schleuderstreuer gemäß den Fig. 2 - 4 und 6 und 7 auf Normalstreuen eingestellt ist, wird der Dünger von den inneren 7", 8" und äußeren 7', 8' Teilen der Wurfschaufeln 7, 8 abgeworfen.

Wenn der Schleuderstreuer gemäß den Fig. 3 und 9 und 10 auf Grenzstreuen eingestellt ist, wird der Dünger von den inneren Teilen 7", 8" der Wurfschaufeln 7, 8 abgeworfen. Beim Grenzstreuen ist es auch möglich, das bezogen auf die Drehrichtung 35 hinter den äußeren Teilen 7', 8' der Wurfschaufeln 7, 8 kürzere, jedoch nicht dargestellte zusätzliche Teile von Wurfschaufeln angeordnet sind, denen nach dem Verschwenken der inneren Teile 7" , 8" der Wurfschaufeln 7, 8 gemäß den Fig. 3 und 9 und 10 der Dünger von den verschwenkten inneren Teilen 7" , 8" der Wurfschaufeln 7, 8 zugeleitet wird.

## Patentansprüche

1. Schleuderdüngerstreuer mit Vorratsbehälter (2), unter dem eine oder mehrere um aufrechte Achsen mittels zumindest einer Antriebswelle (9) rotierend antreibbare Schleuderscheiben (6) angeordnet sind, wobei auf den Schleuderscheiben (16), insbesondere in Scheibenebene über eine Verstelleinrichtung verstellbare Wurfschaufeln (7, 8) angeordnet sind, wobei zumindest einer der Wurfschaufeln (7, 8) ein Stellelement der Verstelleinrichtung zugeordnet ist, über die die Wurfschaufel (7, 8) während des rotierenden Antriebes der Schleuderscheibe (6) verstellbar ist, wobei die Antriebswelle (9) als Hohlwelle ausgebildet ist, wobei durch die Hohlwelle (9) eine um ihre Längsachse gegenüber der Hohlwelle (9) verdrehbare Verstellwelle (17) der Verstelleinrichtung geführt ist, wobei das eine Ende der Verstellwelle (17) mit dem mit dem verstellbaren Teilbereich der Wurfschaufeln (7, 8) und/oder der verstellbaren Wurfschaufeln (7, 8) verbundenen Stellelement verbunden ist, wobei das andere Ende der Verstellwelle (17) mit einem Betätigungselement (18) der Verstelleinrichtung zur Einstellung der Verstellwelle (17) gegenüber der Hohlwelle (9) zusammenwirkt, **dadurch gekennzeichnet, dass** ein zwischen der Hohlwelle (9) und der Verstellwelle (17) wirksames Federelement (23) zur Verdrehung der Verstellwelle (17) gegenüber der Hohlwelle (9) angeordnet ist, und zwar derart, dass durch das Federelement (23) die Verstellwelle (17) entgegen der Drehrichtung (35) der Hohlwelle (9) gegenüber der Hohlwelle (9) verdrehbar ist.

2. Schleuderdüngerstreuer nach Anspruch 1, **dadurch gekennzeichnet, dass** das Federelement als Schenkelfeder (23) ausgebildet ist.

3. Schleuderdüngerstreuer nach zumindest einem der vorstehenden Ansprüche, **dadurch gekennzeichnet, dass** zwischen der Verstellwelle (17) und der Hohlwelle (9) zumindest ein das Verdrehen der Verstellwelle (17) gegenüber der Hohlwelle (9) freigegebendes und die Verstellwelle (9) gegenüber der Hohlwelle (9) festzusetzendes Kupplungselement (28, 29, 30, 31) angeordnet ist.

4. Schleuderdüngerstreuer nach Anspruch 3, **dadurch gekennzeichnet, dass** das Kupplungselement (28) einen in axialer Richtung verschiebbaren Kupplungsstift (27) aufweist, dass mittels des Kupplungsstiftes (27) das zumindest ein Kupplungselement (28, 31) betätigbar ist.

5. Schleuderdüngerstreuer nach zumindest einem der vorstehenden Ansprüche, **dadurch gekennzeichnet, dass** in der Verstellwelle (17) eine sich in axialer Richtung der Verstellwelle (17) erstreckende Aussparung (15) angeordnet ist, dass in dieser Aussparung (15) der in axialer Richtung gegen ein Federelement (26) verschiebbarer Kupplungsstift (27) angeordnet ist, dass der Kupplungsstift (27) mit dem Betätigungselement (18) der Verstelleinrichtung zusammenwirkt.

## Claims

1. Centrifugal fertilizer spreader having a storage container (2), beneath which one or more centrifugal discs (6), which are driveable in rotation about upright axes by means of at least one drive shaft (9), are arranged, wherein thrower blades (7, 8), which are adjustable in particular in the disc plane via an adjusting device, are arranged on the centrifugal discs (6), wherein at least one of the thrower blades (7, 8) is assigned an adjusting element of the adjusting device, via which the thrower blade (7, 8) is adjustable during the rotary drive of the centrifugal disc (6), wherein the drive shaft (9) is in the form of a hollow shaft, wherein an adjusting shaft (17) of the adjusting device is guided through the hollow shaft (9), said adjusting shaft being rotatable about its longitudinal axis with respect to the hollow shaft (9), wherein one end of the adjusting shaft (17) is connected to the adjusting element that is connected to the adjustable subregion of the thrower blades (7, 8) and/or to the adjustable thrower blades (7, 8), wherein the other end of the adjusting shaft (17) interacts with an actuating element (18) of the adjusting device in order to set the adjusting shaft (17) with respect to the hollow shaft (9), **characterized in that** a spring element (23) that acts between the hollow shaft (9) and the adjusting shaft (17) is arranged so as to rotate the adjusting shaft (17) with respect to the hollow shaft (9), specifically such that, by way of the spring element (23), the adjusting shaft (17) is rotatable with respect to the hollow shaft (9) counter to the direction of rotation (35) of the hollow shaft (9).

2. Centrifugal fertilizer spreader according to Claim 1, **characterized in that** the spring element is in the form of a leg spring (23).

3. Centrifugal fertilizer spreader according to at least one of the preceding claims, **characterized in that** at least one coupling element (28, 29, 30, 31) which enables the rotation of the adjusting shaft (17) with respect to the hollow shaft (9) and fixes the adjusting shaft (17) with respect to the hollow shaft (9) is arranged between the adjusting shaft (17) and the hollow shaft (9).

4. Centrifugal fertilizer spreader according to Claim 3, **characterized in that** the coupling element (28) has a coupling pin (27) that is movable in the axial direction, and **in that** the at least one coupling element (28, 31) is actuable by means of the coupling pin (27).

5. Centrifugal fertilizer spreader according to at least one of the preceding claims, **characterized in that** a recess (15) that extends in the axial direction of the adjusting shaft (17) is arranged in the adjusting shaft (17), **in that** the coupling pin (27) that is movable in the axial direction counter to a spring element (26) is arranged in said recess (15), and **in that** the coupling pin (27) interacts with the actuating element (18) of the adjusting device.

## Revendications

1. Épandeur d'engrais centrifuge comprenant un réservoir de stockage (2) sous lequel sont disposés un ou plusieurs disques centrifuges (6) pouvant être entraînés en rotation autour d'axes verticaux au moyen d'au moins un arbre d'entraînement (9), des pales d'éjection (7, 8) étant disposées sur les disques centrifuges (6), en particulier de manière réglable dans le plan des disques par le biais d'un dispositif de réglage, au moins l'une des pales d'éjection (7, 8) étant associée à un actionneur du dispositif de réglage, par le biais duquel dispositif de réglage la pale d'éjection (7, 8) peut être réglée pendant l'entraînement en rotation du disque centrifuge (6), l'arbre d'entraînement (9) étant réalisé sous forme d'arbre creux, un arbre de réglage (17) du dispositif de réglage pouvant tourner autour de son axe longitudinal par rapport à l'arbre creux (9) étant guidé par l'arbre creux (9), l'une des extrémités de l'arbre de réglage (17) étant connectée à l'actionneur connecté à la région partielle réglable des pales d'éjection (7, 8) et/ou aux pales d'éjection réglables (7, 8), l'autre extrémité de l'arbre de réglage (17) coopérant avec un élément d'actionnement (18) du dispositif de réglage pour ajuster l'arbre de réglage (17) par rapport à l'arbre creux (9), **caractérisé en ce qu'**un élément de ressort (23) agissant entre l'arbre creux (9) et l'arbre de réglage (17) est prévu pour faire tourner l'arbre de réglage (17) par rapport à l'arbre creux (9), et ce de telle sorte que l'arbre de réglage (17), par le biais de l'élément de ressort (23), puisse tourner par rapport à l'arbre creux (9) à l'encontre du sens de rotation (35) de l'arbre creux (9).

2. Épandeur d'engrais centrifuge selon la revendication 1, **caractérisé en ce que** l'élément de ressort est réalisé sous forme de ressort à branches (23).

3. Épandeur d'engrais centrifuge selon au moins l'une quelconque des revendications précédentes, **caractérisé en ce qu'**entre l'arbre de réglage (17) et l'arbre creux (9) est disposé au moins un élément d'accouplement (28, 29, 30, 31) libérant la rotation de l'arbre de réglage (17) par rapport à l'arbre creux (9) et fixant l'arbre de réglage (17) par rapport à l'arbre creux (9).

4. Épandeur d'engrais centrifuge selon la revendication 3, **caractérisé en ce que** l'élément d'accouplement (28) présente une goupille d'accouplement (27) déplaçable dans la direction axiale, **en ce que** l'au moins un élément d'accouplement (28, 31) peut être actionné au moyen de la goupille d'accouplement (27).

5. Épandeur d'engrais centrifuge selon au moins l'une quelconque des revendications précédentes, **caractérisé en ce qu'**un évidement (15) s'étendant dans la direction axiale de l'arbre de réglage (17) est disposé dans l'arbre de réglage (17), **en ce que** dans cet évidement (15) est disposée la goupille d'accouplement (27) pouvant être déplacée dans la direction axiale par rapport à un élément de ressort (26), et **en ce que** la goupille d'accouplement (27) coopère avec l'élément d'actionnement (18) du dispositif de réglage.
